Europäisches Patentamt

European Patent Office

Office européen des brevets

(11) Publication number: **0 469 762 A1**

# EUROPEAN PATENT APPLICATION

(21) Application number: **91306631.2**

(22) Date of filing: **22.07.91**

(51) Int. Cl.⁵: **G06K 7/08**, G06K 19/00, G07F 7/02

(30) Priority: **31.07.90 GB 9016830**

(43) Date of publication of application:
**05.02.92 Bulletin 92/06**

(84) Designated Contracting States:
**AT BE CH DE DK ES FR GB IT LI NL SE**

(71) Applicant: **GEC AVERY LIMITED**
**Smethwick**
**Warley, West Midlands, B66 2LP(GB)**

(72) Inventor: **Jones, Alan**
**95 Lincoln Avenue, Clayton**
**Newcastle-U.-Lyme, Staffordshire ST5**
**3BA(GB)**

(74) Representative: **Loven, Keith James et al**
**GEC Patent Department, GEC Marconi**
**Limited, West Hanningfield Road**
**Great Baddow Chelmsford, Essex CM2**
**8HN(GB)**

(54) **Reader unit.**

(57) A contactless integrated circuit card (22) reader unit comprises a pair of power-transmitting coils (20) of opposite handedness in a side by side arrangement, to constrain the field more precisely and to permit a card having its coil in only one half (thereby permitting the other half to be embossed with numbers and letters) to be used in any orientation on the reader.

A.N.Other

97213-4122-1    EXP: 02/99

Fig 2

EP 0 469 762 A1

The present invention relates to a reader unit for supplying power by inductive coupling to an integrated circuit token, such as a contactless smart card.

Contactless smart card systems typically comprise a card or other token having a memory and on board data processing means linked to a coil. The card is used in conjunction with a reader unit which also includes a coil connected to a power supply and further data processing means. The card and the reader communicate with each other by inductive coupling between the coils, the reader unit providing both power and data to the card. Such a system is described GB-A-2173623 and GB-A-2208025.

In accordance with the invention, there is provided a reader unit for supplying power by inductive coupling to an integrated circuit token containing a substantially planar power-receiving coil, the reader unit comprising means for receiving the token such that the power-receiving coil therein lies in a working plane, and inductive power supply means connected to a pair of power-transmitting coils arranged on one side of and adjacent to the working plane such that the magnetic fields induced by the power-transmitting coils are of opposite polarity.

Preferably, the power-transmitting coils are substantially planar and lie in the same plane. In one embodiment, the power-transmitting coils have turns of opposite handedness and it is particularly preferred that the coils are connected such that a single coil member is used to define the two coils.

In a particularly preferred embodiment, each power-transmitting coil corresponds in size to that of the power-receiving coil present in a card which is to be read by the reader, and it is also preferred that the reader includes a flux-concentrating body, suitably a shaped ferrite.

The power-transmitting coils may be formed as conductive elements on a printed circuit board or the like, or as wire-wound coils. More than one pair of such coils may be used, all the coils being on the same side of the working plane.

The reader unit preferably comprises data transmission means for modulating the power transmitted to the token in accordance with data to be transmitted thereto. Data receiving means may also be included for detecting a variation in power absorbed by the token in accordance with data to be transmitted from the token to the reader. The data receiving means may comprise a sensing coil for sensing fluctuation in the magnetic field induced by the power-transmitting coils. The sensing coil may be substantially planar and may lie in the same plane as the power-transmitting coils, or in a plane parallel thereto. The turns of the sensing coil may be located within the turns of the power-transmitting coils. In one embodiment, two sensing coils are provided in series, the turns of each sensing coil being located in spaces between the turns of a respective one of the power-transmitting coils.

In another embodiment, more than one sensing coil is provided within the power-transmitting coil.

As the sensing coil is sensing fluctuations in field and it does not have to transmit power, it can have fewer turns and be generally smaller than the power-transmitting coils.

By providing a pair of coils with opposite polarity, the field induced by the coils is constrained to the reader unit more closely and so provides improved performance and reduced r.f. leakage.

The second "sense" coil or coils can be used to detect the presence of a card within range of the reader.

The present invention will now be described by way of example, with reference to the drawings, in which:-

Figure 1 shows a plan view of a reader unit according to one embodiment of the invention;

Figure 2 shows a plan view of an integrated circuit card suitable for coupling with the reader unit of Figure 1;

Figure 3 is a schematic side view of the embodiment of the coil arrangement of the reader unit shown in Figure 1; and

Figure 4 is a plan view of an alternative embodiment of the invention.

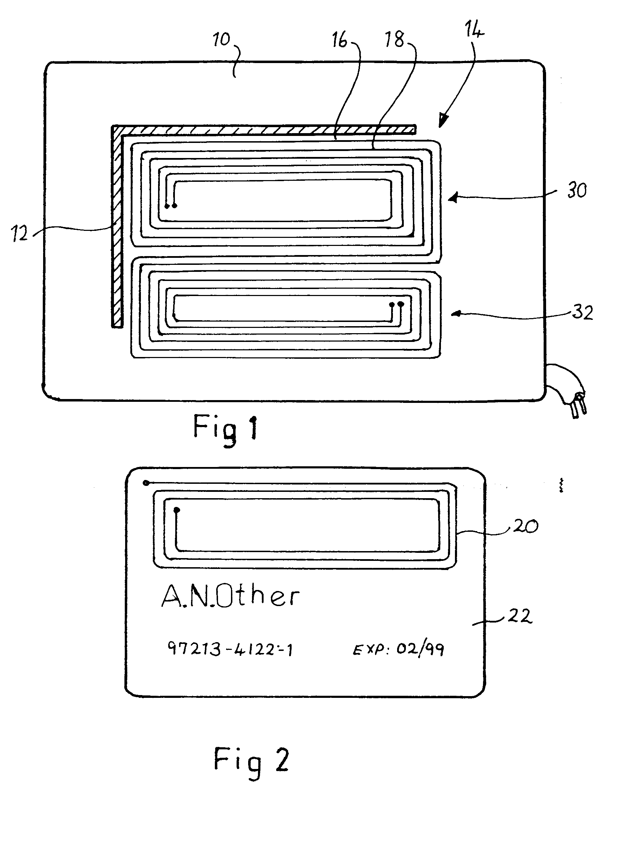

Referring now to Figure 1, the reader unit comprises a base member 10 having an upstanding shaped wall 12 on the upper surface thereof. A double induction coil arrangement 14 is defined in the base 10 below the surface and comprises a power coil 16 and a sense coil 18. The coils 16 and 18 are configured as two coil regions 30 and 32 of opposite handedness, arranged side-by-side. The size and shape of each of coil regions 30 and 32 correspond substantially to those of a card coil 20, which is typically positioned in a card 22 as shown in Figure 2. However, the size, shape and positioning of both the power coil 16 and the sense coil 18 can be selected according to requirements. The card comprises a thin plastic substrate having a plurality of electronic components dispersed therein (not shown) as well as the coil 20, the components serving to handle power and data communicated to and from the reader unit. The typical manner in which the card functions is that power and data are provided to the card by an inductive coupling method, as is known in this field, and the card sends data to the reader by modulation of the field at a reader unit by power absorption.

As it is often necessary for embossed numbers or letters to be provided on the card 22, the coil is often restricted to only half of the card area. Consequently, accurate positioning of the card coil over the reader coils is required and the provision of the wall 12 allows the card to be positioned accurately such that the coils align and allow efficient coupling. However, as each of the coil regions 30 and 32 corresponds in size and shape to the card coil 20, it does not matter which way up the card is placed on the reader as the card coil will always be placed over a reader coil.

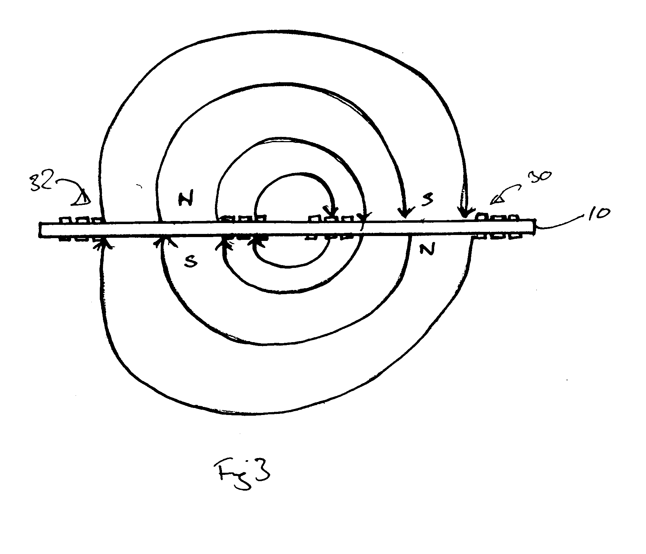

Since the coil portions 30, 32 have opposite handedness, the fields induced thereby have opposite polarity. Consequently, these fields will be constrained as shown in Figure 3, which means that the transition between the reading and non-reading state of the reader is much more defined, and the coupling is much more effective. Furthermore, several readers can be placed in close proximity without the fields interfering.

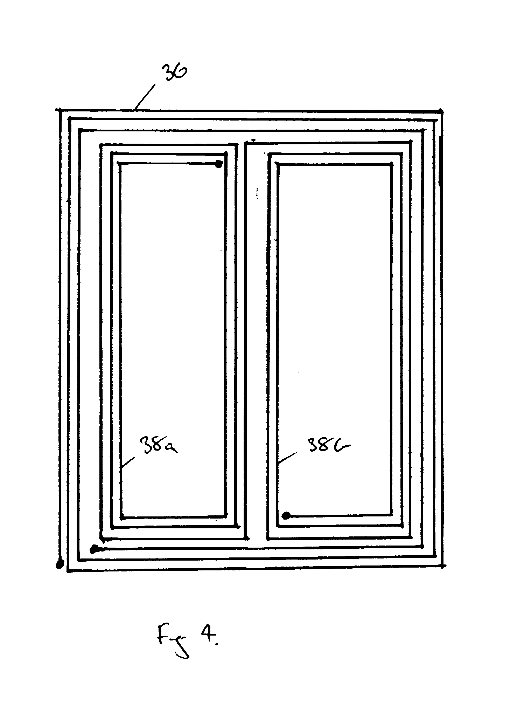

With regard to Figure 4, the embodiment shown therein comprises a single power coil 36 and two sense coils 38a and 38b located within the turns of the power coil. When the card is placed on this reader, the alignment of the card coils with the power coil is less important than the alignment with the sense coils and again this arrangement allows the card to be positioned either way up on the reader and still allow coupling to take place.

The sense coil can also be used to detect the presence of a card. When a card is brought into the field of the reader, the absorption of power by the card can be detected by the sense coil which can cause the reader to transmit data.

**Claims**

1. A reader unit for supplying power by inductive coupling to an integrated circuit token containing a substantially planar power-receiving coil, the reader unit comprising means for receiving the token such that the power-receiving coil therein lies in a working plane, and inductive power supply means connected to a pair of power-transmitting coils arranged on one side of and adjacent to the working plane such that the magnetic fields induced by the power-transmitting coils are of opposite polarity.

2. A reader unit according to Claim 1, wherein the power-transmitting coils are substantially planar and lie in the same plane.

3. A reader unit according to Claim 1 or 2, wherein the power-transmitting coils are linked by a body of flux-concentrating material.

4. A reader unit according to Claim 4, wherein the body is a ferrite core.

5. A reader unit according to any preceding claim, wherein the power-transmitting coils are formed as conductive elements on a printed circuit board.

6. A reader unit according to any of Claims 1 to 4, wherein the power-transmitting coils are wire-wound coils.

7. A reader unit according to Claim 5 or 6, wherein the power-transmitting coils are connected such that a single conductor is used to define the two coils.

8. A reader unit according to any preceding claim, wherein data transmission means are provided for modulating the power transmitted to the token in accordance with data to be transmitted thereto.

9. A reader unit according to any preceding claim, comprising more than one pair of power-transmitting coils, all of the said coils being arranged on the said one side of the working plane.

10. A reader unit according to any preceding claim, wherein data receiving means are provided for detecting a variation in power absorbed by the token in accordance with data to be transmitted from the token to the reader.

11. A reader unit according to Claim 10, wherein the data receiving means comprises a sensing coil for sensing fluctuation in the magnetic field induced by the power-transmitting coils.

12. A reader unit according to Claim 11, wherein the sensing coil is substantially planar and lies in the same plane as the power-transmitting coils, or in a plane parallel thereto.

13. A reader unit according to Claim 12, wherein the turns of the sensing coil are located within the turns of the power-transmitting coils.

14. A reader unit according to Claim 13, wherein two sensing coils are provided in series, the turns of each sensing coil being located in spaces between the turns of a respective one of the power-transmitting coils.

Fig 1

A.N.Other

97213-4122-1        EXP: 02/99

Fig 2

Fig 3

Fig 4.

## DOCUMENTS CONSIDERED TO BE RELEVANT

EP 91306631.2

| Category | Citation of document with indication, where appropriate, of relevant passages | Relevant to claim | CLASSIFICATION OF THE APPLICATION (Int. Cl.5) |
|---|---|---|---|
| X | GB - A - 2 177 528 (NIHON) <br> * Totality; espically claims 1-8; fig. 1-3 * | 1-6,8, 9,12 | G 06 K 7/08 <br> G 06 K 19/00 <br> G 07 F 7/02 |
| X | GB - A - 2 081 949 (SECURITAS) <br> * Totality; especially claims 1-6; fig. 1-4 * | 1,2 | |
| X | AT - B - 389 182 (SCHRACK) <br> * Totality; claims 1-5; fig. 1-3 * | 1,2,4, 9 | |
| A | EP - A2 - 0 157 995 (I.P.M) <br> * Page 11; fig. 1,2 * | 1,2,4 | |

TECHNICAL FIELDS SEARCHED (Int. Cl.5)

G 06 K
G 07 F
G 06 F

The present search report has been drawn up for all claims

| Place of search <br> VIENNA | Date of completion of the search <br> 12-11-1991 | Examiner <br> MIHATSEK |
|---|---|---|